(19) **Europäisches Patentamt**

**European Patent Office**

**Office européen des brevets**

(11) **EP 1 717 605 A2**

(12) **EUROPÄISCHE PATENTANMELDUNG**

| | |
|---|---|
| (43) Veröffentlichungstag:<br>**02.11.2006 Patentblatt 2006/44** | (51) Int Cl.:<br>*G01V 3/12* *(2006.01)* |

(21) Anmeldenummer: **06008061.1**

(22) Anmeldetag: **19.04.2006**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | (72) Erfinder:<br> • **Argast, Martin**<br>  **72584 Hülben (DE)**<br> • **Müller, Bernhard, Dr.**<br>  **71083 Herrenberg (DE)** |
| (30) Priorität: **29.04.2005 DE 102005019909** | (74) Vertreter: **Ruckh, Rainer Gerhard**<br>**Fabrikstrasse 18**<br>**73277 Owen/Teck (DE)** |
| (71) Anmelder: **Leuze electronic GmbH + Co. KG**<br>**73277 Owen/Teck (DE)** | |

(54) **Verfahren zum Betrieb eines Optosensors**

(57)     Die Erfindung betrifft ein Verfahren zum Betrieb eines optischen Sensors (1). Dieser enthält mindestens einen Sendelichtstrahlen (4, 4') emittierenden Sender (5, 5') sowie mindestens einen Empfangslichtstrahlen (6, 6') empfangenden Empfänger (7). Ebenfalls enthält er eine Auswerteeinheit zur Generierung eines binären Schaltsignals. Die Schaltzustände des binären Schaltsignals geben an, ob sich ein Objekt (2) in einem Überwachungsbereich befindet oder nicht. Aus Empfangssignalen des Empfängers (7) wird wenigstens ein Auswerteparameter abgeleitet, wobei für Werte oder Wertbereiche des Auswerteparameters Häufigkeitsverteilungen ermittelt werden. Durch Zuordnung von aktuell ermittelten Messwerten für die Auswerteparameter zu den Häufigkeitsverteilungen werden Wahrscheinlichkeiten für die Schaltzustände des binären Schaltsignals und/oder des Status des optischen Sensors (1) abgeleitet.

Fig 1

EP 1 717 605 A2

**Beschreibung**

Die Erfindung betrifft einen optischen Sensor sowie ein Verfahren zu dessen Betrieb.

Derartige optische Sensoren können generell als Lichttaster, Reflexionslichtschranken und dergleichen ausgebildet sein.

Generell weisen derartige optische Sensoren einen Sendelichtstrahlen emittierenden Sender und einen Empfangslichtstrahlen empfangenden Empfänger auf. Weiterhin ist eine Auswerteeinheit vorgesehen, in welcher aus den Empfangssignalen des Empfängers ein binäres Schaltsignal generiert wird, dessen Schaltzustände angeben, ob sich ein Objekt im Überwachungsbereich befindet oder nicht.

Bei bekannten optischen Sensoren werden zur Generierung des binären Schaltsignals die Empfangssignale mit einem Schwellwert bewertet. Der Schwellwert wird vor Inbetriebnahme des optischen Sensors festgelegt. Problematisch hierbei ist, dass der Schwellwert so festgelegt werden muss, dass mit diesem gleichermaßen hoch reflektierende Objekte und diffus reflektierende Objekte erkannt werden müssen. Zudem müssen Objekte in unterschiedlichen Distanzen zum optischen Sensor innerhalb des Überwachungsbereichs erfasst werden. Dies bedeutet, dass die Amplituden der Empfangssignale bei der Objektdetektion innerhalb eines großen Bereichs variieren können.

Bei als Lichttastern oder Reflexionslichtschranken ausgebildeten optischen Sensoren muss daher der Schwellwert möglichst gering gewählt werden, um möglichst ein großes Spektrum von Objekten sicher erkennen zu können. Dies bedeutet, dass der Schwellwert nur geringfügig über dem Pegel von Rauschsignalen liegt. Bedingt durch Fertigungstoleranzen, Verschmutzungen und Alterungen von Komponenten des optischen Sensors kann es damit jedoch leicht zu Fehlschaltungen des optischen Sensors kommen, d. h. die Detektionssicherheit des optischen Sensors ist dann in unerwünschter Weise beeinträchtigt, da mit der Schwellwertberechnung der Empfangssignale keine sichere Objektdetektion gewährleistet ist.

Durch den Einbau zusätzlicher Komponenten wie Polarisationsfiltern im Strahlengang der Sendelichtstrahlen und/oder der Empfangslichtstrahlen können derartige Fehlschaltungen reduziert werden. Jedoch können die Fehlschaltungen mit derartigen Zusatzmaßnehmen nur unzureichend unterdrückt werden. Weiterhin führen derartige zusätzliche Komponenten zu einer unerwünschten Erhöhung der Herstellkosten des optischen Sensors.

Der Erfindung liegt die Aufgabe zugrunde, einen optischen Sensor der eingangs genannten Art bereitzustellen, mit welchem eine sichere Detektion von Objekten aller Art ermöglicht wird.

Zur Lösung dieser Aufgabe sind die Merkmale der Ansprüche 1 und 14 vorgesehen. Vorteilhafte Ausführungsformen und zweckmäßige Weiterbildungen der Erfindung sind in den Unteransprüchen beschrieben.

Die Erfindung betrifft ein Verfahren zum Betrieb eines optischen Sensors. Dieser enthält mindestens einen Sendelichtstrahlen emittierenden Sender sowie mindestens einen Empfangslichtstrahlen empfangenden Empfänger. Ebenfalls enthält er eine Auswerteeinheit zur Generierung eines binären Schaltsignals. Die Schaltzustände des binären Schaltsignals geben an, ob sich ein Objekt in einem Überwachungsbereich befindet oder nicht. Aus Empfangssignalen des Empfängers wird wenigstens ein Auswerteparameter abgeleitet, wobei für Werte oder Wertbereiche des Auswerteparameters Häufigkeitsverteilungen ermittelt werden. Durch Zuordnung von aktuell ermittelten Messwerten für die Auswer-Auswerteparameter zu den Häufigkeitsverteilungen werden Wahrscheinlichkeiten für die Schaltzustände des binären Schaltsignals und/oder des Status des optischen Sensors abgeleitet.

Der Grundgedanke der Erfindung besteht darin, durch die Bestimmung von Häufigkeitsverteilungen für Auswerteparameter des optischen Sensors dessen Verhalten bei der Detektion unterschiedlicher Objekte auf der Basis einer Vielzahl von Messergebnissen genau und zuverlässig zu erfassen, um dann durch Wahrscheinlichkeitsberechnungen aus den Häufigkeitsverteilungen den Schaltzustand des Signals und gegebenenfalls Informationen über den Status des optischen Sensors zu ermitteln.

Wesentlich hierbei ist, dass durch die aus den Häufigkeitsverteilungen von Auswerteparametern abgeleiteten Wahrscheinlichkeiten eine detaillierte und dem Betriebszustand optimal angepasste Auswertung der Empfangssignale erzielt wird, die eine störungsunanfällige und sichere Detektion von Objekten aller Art gewährleistet.

In einer besonders vorteilhaften Ausführungsform werden während eines Einlernvorgangs die ermittelte Häufigkeitsverteilungen während des nachfolgenden Betriebs des optischen Sensors nachgeführt, wodurch Störeinflüsse auf den optischen Sensor, beispielsweise bedingt durch Verschmutzung oder Alterung von Komponenten des optischen Sensors, kompensiert werden können. Dies führt zu einer deutlichen Erhöhung der Detektionssicherheit des optischen Sensors.

Besonders vorteilhaft wird eine Mehrzahl von Auswerteparametern zur Ermittlung des Schaltsignals und/oder des Status des optischen Sensors herangezogen.

Da durch die Auswertung mehrerer Auswerteparameter umfangreiche Informationen über die zu detektierenden Objekte gewonnen werden, wird dadurch die Detektionssicherheit des optischen Sensors weiter erhöht. Weiterhin wird dadurch eine gegen Störungen besonders unempfindliche Auswertung der Empfangssignale erhalten. Dies beruht insbesondere auch darauf, dass sich Störungsflüsse typischerweise nur auf einen Teil der Auswerteparameter auswirken und damit ein Teil der Auswerteparameter, die zur Ermittlung des Schaltzustands herangezogen wurden, von den Störeinflüssen unbeeinflusst bleibt.

Ein weiterer wesentlicher Vorteil der Erfindung besteht darin, dass die erfindungsgemäßen Maßnahmen zur Erhöhung der Detektionssicherheit des optischen Sensors ohne konstruktive Änderungen und damit ohne eine Erhöhung der Herstellkosten des optischen Sensors durchgeführt werden können.

Die Erfindung wird im Nachstehenden anhand der Zeichnungen erläutert. Es zeigen:

Figur 1  Ausführungsbeispiel eines als Lichttaster ausgebildeten optischen Sensors

Figur 2  Diagramm zur Festlegung von Startwerten zur Objektdetektion mit dem optischen Sensor gemäß Figur 1

Figur 3  Diagramm zur Ableitung von Toleranzbändern aus Häufigkeitsverteilungen für eine erste Variante der Objektdetektion mit dem optischen Sensor gemäß Figur 1

Figur 4a  Diagramm zur Ermittlung von Häufigkeitsverteilungen für eine zweite Variante der Objektdetektion mit dem optischen Sensor gemäß Figur 1

Figur 4b  Normierung der Häufigkeitsverteilungen gemäß Figur 4a

Figur 4c  Beispiel einer Objektdetektion anhand der Häufigkeitsverteilungen gemäß Figur 4b

Figur 4d  Identifizierung einer Störung anhand der Häufigkeitsverteilungen gemäß Figur 4b

Figur 5c  Variante zur Ermittlung von Häufigkeitsverteilungen gemäß Figur 4a

Figur 6a  Ausführungsbeispiel eines als Reflexionslichtschranke ausgebildeten optischen Sensors

Figur 6b  Unterschiedliche Häufigkeitsverteilungen für den optischen Sensor gemäß Figur 6a

Figur 7a, b  Diagramme zur Durchführung der Objekterkennung mit dem optischen Sensor gemäß Figur 6a

Figur 8  Schematische Darstellung des Aufbaus eines optischen Sensors zur Auswertung mehrerer Auswerteparameter

Figur 9a  Erste Ausgestaltung des optischen Sensors gemäß Figur 8

Figur 9b  Abbildung eines Empfangslichtflecks auf einer Empfängerzeile des optischen Sensors gemäß Figur 9a

Figur 9c  Empfangssignalverlauf auf der Empfängerzeile gemäß Figur 9b bei Detektion eines diffus reflektierenden Objekts

Figur 9d  Empfangssignalverlauf auf der Empfängerzeile gemäß Figur 9b bei Detektion eines Reflektors

Figur 10  Häufigkeitsverteilungen für Empfangspegel als erstem Auswerteparameter für den optischen Sensor gemäß Figur 9a

Figur 11  Häufigkeitsverteilungen für Distanzwerte als zweitem Auswerteparameter für den optischen Sensor gemäß Figur 9a

Figur 12  Häufigkeitsverteilungen für das Rückstrahlverhalten als drittem Auswerteparameter für den optischen Sensor gemäß Figur 9a

Figur 13a  Zweite Ausgestaltung des optischen Sensors gemäß Figur 8

Figur 13b  Empfangssignalverlauf bei Detektion eines spiegelnden Objekts mit dem optischen Sensor gemäß Figur 13a

Figur 14  Beispiel der Auswertung von Auswerteparametern bei einem als Reflexionslichtschranke ausgebildeten optischen Sensors bei Detektion eines Retroreflektors.

a) Auswerteparameter: Empfangspegel

b) Auswerteparameter: Distanz

c) Auswerteparameter: Rückstrahlverhalten

d) Auswerteparameter: Pegelverhältnis

Figur 15   Auswertematrix für das Beispiel gemäß Figur 14

Figur 16   Beispiel der Auswertung von Auswerteparametern bei einem als Reflexionslichtschranke ausgebildeten optischen Sensors bei Detektion eines Objekts.

a) Auswerteparameter: Empfangspegel

b) Auswerteparameter: Distanz

c) Auswerteparameter: Rückstrahlverhalten

Figur 17   Auswertematrix für das Beispiel gemäß Figur 16

Figur 18   Beispiel der Auswertung von Auswerteparametern bei einem als Reflexionslichtschranke ausgebildeten optischen Sensors bei Vorliegen einer Störung

a) Auswerteparameter: Empfangspegel

b) Auswerteparameter: Distanz

c) Auswerteparameter: Rückstrahlverhalten

Figur 19   Auswertematrix für das Beispiel gemäß Figur 18

Figur 20   Weiteres Ausführungsbeispiel eines optischen Sensors

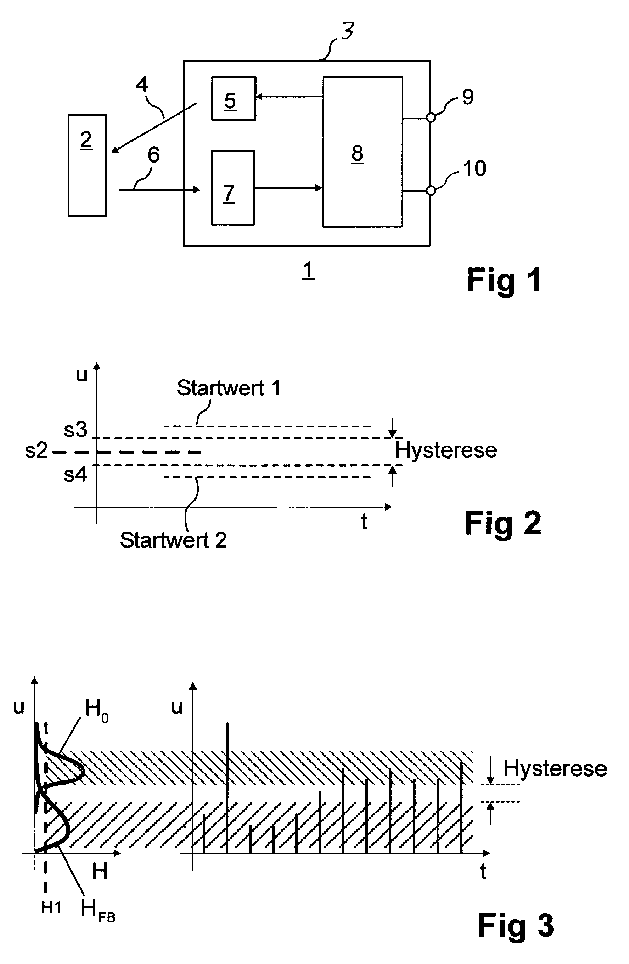

Figur 1 zeigt schematisch den Aufbau eines als Lichttasters ausgebildeten optischen Sensors 1 zur Erfassung von Objekten 2 in einem Überwachungsbereich. Der optische Sensor 1 ist in einem Gehäuse 3 integriert und weist einen Sendelichtstrahlen 4 emittierenden Sender 5 und einen Empfangslichtstrahlen 6 empfangenden Empfänger 7 auf. Der Sender 5 ist von einer Leuchtdiode gebildet, der Empfänger 7 besteht im einfachsten Fall aus einer Photodiode. Der Sender 5 und der Empfänger 7 sind an eine Auswerteeinheit 8 angeschlossen, die von einem Mikroprozessor oder dergleichen gebildet ist. Die Auswerteeinheit 8 dient zur Ansteuerung des Senders 5. Weiterhin werden in der Auswerteeinheit 8 die am Ausgang des Empfängers 7 anstehenden Empfangssignale ausgewertet, um daraus ein binäres Schaltsignal zu generieren, dessen Schaltzustände angeben, ob sich ein Objekt 2 im Überwachungsbereich befindet oder nicht. Das Schaltsignal wird über einen Schaltausgang 9 ausgegeben. Über eine Schnittstelle 10 können Parameter des optischen Sensors 1 definiert und in diesen eingegeben werden.

Figur 2 zeigt schematisch den Beginn eines Einlernvorgangs für den optischen Sensor 1 gemäß Figur 1. Als Startwert 1 wird der Empfangspegel U bei der Detektion eines Objekts 2 ermittelt. Als Startwert 2 wird der Empfangspegel U bei freiem Überwachungsbereich, d. h. bei auf einen weit entfernten Hintergrund gerichteten Sendelichtstrahlen 4, ermittelt.

Aus den Startwerten 1 und 2 wird durch Mittelwertbildung ein Schwellwert s2 abgeleitet. Durch Vorgabe einer als Parameterwert im optischen Sensor 1 hinterlegten Hysterese wird aus dem Schwellwert eine Einschaltschwelle s3 und eine Ausschaltschwelle s4 abgeleitet. Mit diesen Schwellwerten wäre prinzipiell eine Objektdetektion möglich.

Erfindungsgemäß erfolgt jedoch eine Objektdetektion ohne Vorgabe derartiger Schwellwerte. Vielmehr wird, wie in Figur 3 veranschaulicht, der Einlernvorgang derart weitergeführt, dass bei einer Vielzahl von Messmengen mit dem optischen Sensor 1 gegen ein Objekt 2 und bei freiem Überwachungsbereich jeweils die Häufigkeitsverteilungen der bei diesen Messmengen erhaltenen Empfangspegel als Auswerteparameter ermittelt werden. In Figur 3 sind diese Häufigkeitsverteilungen für die Detektion eines Objekts 2 bzw. bei Messungen im freien Überwachungsbereich mit $H_O$ bzw. mit $H_{FB}$ bezeichnet. Diese Häufigkeitsverteilungen werden mit einer Schwelle $H_1$ bewertet, wodurch Toleranzbänder $T_O$ und $T_{FB}$ gebildet werden, die durch eine weitere Hysterese getrennt sind.

Während der auf den Einlernvorgang folgenden Betriebsphase dienen diese Toleranzbänder $T_O$, $T_{FB}$ zur Definition des Schaltzustandes des Schaltsignals.

Liegt ein Messwert im Toleranzband $T_O$ liegt eine Objektdetektion vor und das Schaltsignal nimmt den Schaltzustand "Objekt erkannt" ein. Liegt ein Messwert im Toleranzband $T_{FB}$, so nimmt das Schaltsignal den Schaltzustand "freier Überwachungsbereich" ein. Liegt ein Messwert außerhalb der Toleranzbänder $T_O$, $T_{FB}$, so signalisiert der optische Sensor 1 eine Störung und der Schaltausgang 9 nimmt den Schaltzustand "freier Überwachungsbereich" ein.

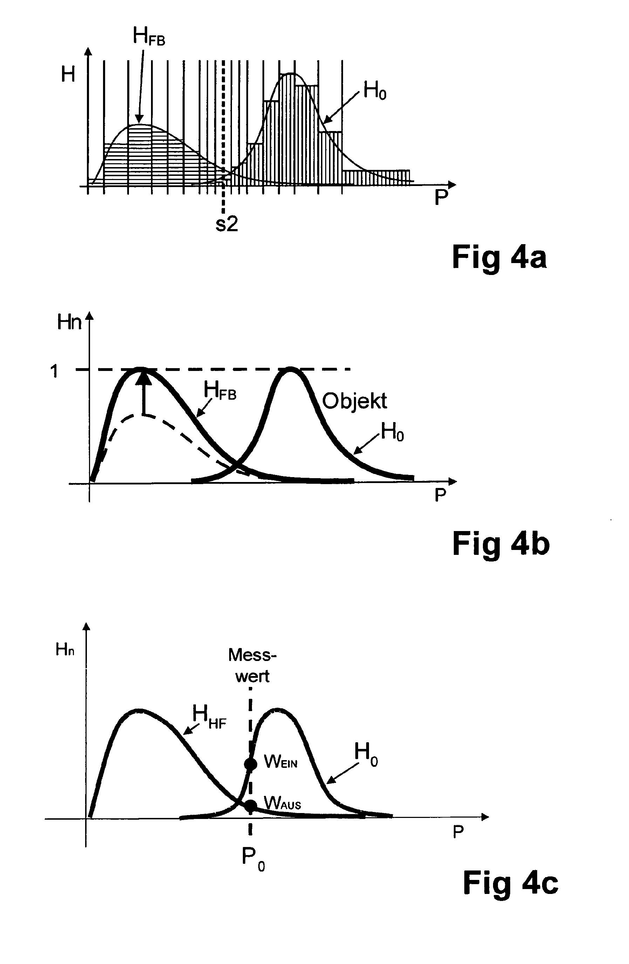

Die Figuren 4a bis 4d zeigen eine alternative Vorgehensweise zur Generierung des Schaltsignals bei dem optischen Sensor 1 gemäß Figur 1.

Als Auswerteparameter wird wiederum der Empfangspegel P der Empfangssignale des Empfängers 7 herangezogen. Wie aus Figur 4a ersichtlich, werden in eine diskrete Rasterung bildenden Pegelkategorien die Häufigkeitsverteilungen $H_{FB}$, $H_O$ für einen freien Überwachungsbereich und eine Objektdetektion durch Registrieren einer Vielzahl von Messwerten während eines Einlernvorgangs ermittelt. Wie aus Figur 4a ersichtlich, sind im Bereich des Schwellwerts s2, in welchem der Schaltzustand des Schaltsignals wechselt, die Breiten der Pegelkategorien minimal um dort eine besonders große Auflösung der Häufigkeitsverteilung zu erhalten.

Figur 4b zeigt die Normierung der Häufigkeitsverteilungen gemäß Figur 4a. Die in den Figuren 4a und 4b dargestellten, während des Einlernvorgangs aufgenommenen Häufigkeitsverteilungen werden während des Betriebs des optischen Sensors 1 durch eine fortlaufende Registrierung weiterer Messwerte nachgefiihrt. Damit können Drifterscheinungen, bedingt durch Verschmutzungen oder jahreszeitlich bedingte Temperaturänderungen, kompensiert werden.

Figur 4c veranschaulicht das Verfahren zur Generierung des Schaltsignals unter Verwendung der Häufigkeitsverteilungen gemäß den Figuren 4a und 4b. Dabei ist mit der gestrichelten Linie der Pegelwert $P_O$ eines aktuellen Messwerts dargestellt. Für diesen Messwert ist der Wert von $H_O$, der der Wahrscheinlichkeit $W_{ein}$ für eine Objektdetektion entspricht, signifikant größer als der Wert von $H_{FB}$, der der Wahrscheinlichkeit $W_{aus}$ für einen freien Überwachungsbereich entspricht. Dementsprechend ist $W_{ein} > W_{aus}$, so dass das Schaltsignal den Schaltzustand "ein", d. h. "Objekt erkannt" einnimmt.

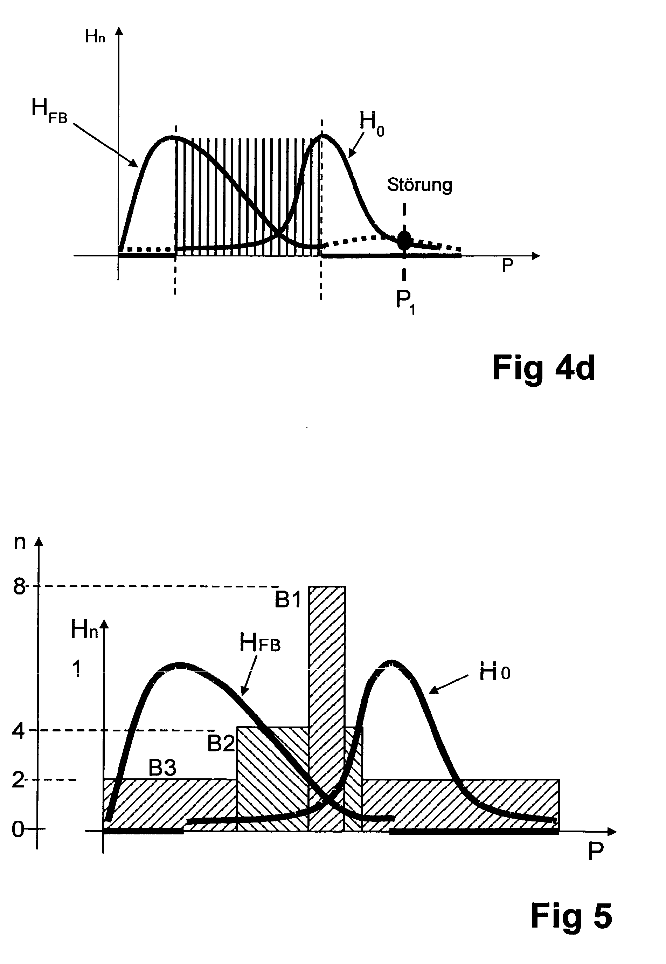

Figur 4d zeigt die Auswertung eines weiteren Messwerts mit dem Pegel $P_1$. Dieser liegt weit außerhalb der Maxima der Häufigkeitsverteilungen $H_O$ und $H_{FB}$, so dass eine Zuordnung des Messwerts zu einer Objektdetektion ($H_O$) oder einem freien Überwachungsbereich ($H_{FB}$) nicht mehr eindeutig wäre. Um eindeutige Verhältnisse sicherzustellen, wird die Häufigkeitsverteilung $H_{FB}$ rechts vom Maxima $H_O$ auf Null gesetzt.

Figur 5 zeigt eine Variante von Figur 4a zur Ermittlung der Häufigkeitsverteilungen $H_O$ und $H_{FB}$ für einen optischen Sensor 1 gemäß Figur 1. In diesem Fall werden zur Ermittlung der Häufigkeitsverteilungen nur wenige diskrete Pegelkategorien verwendet, wobei die für die in Figur 5 dargestellten Pegelkategorien B1 bis B3 folgende Bezeichnungen gelten

B1, wenn $| W_{ein} - W_{aus} | < 0,1$

B2, wenn $0,1 < | W_{ein} - W_{aus} | < 0,5$

B3, wenn $0,5 < | W_{ein} - W_{aus} |$

wobei die Wahrscheinlichkeiten $W_{ein}$ und $W_{aus}$ wiederum den Amplituden von $H_O$ bzw. $H_{FB}$ entsprechen.

Bei der Ausführungsform gemäß Figur 5 kann vorteilhaft die Anzahl der zur Ermittlung des Schaltzustands herangezogenen Messwerte pegelabhängig gewählt werden.

Der Schaltzustand wird wieder durch das Vorzeichen der Differenz der beiden Wahrscheinlichkeiten $W_{ein}$ und $W_{aus}$ bestimmt. Im Bereich B3 ist der Betrag der Differenz immer groß, so dass wenige Messwerte genügen, um einen eindeutigen Schaltzustand zu ermitteln. Im Bereich B1 kann das Vorzeichen der Differenz durch Rauschen oder Störsignale beeinflusst werden, weshalb es hier sinnvoll ist über mehrere Messwerte zu mitteln. Gegenüber dem Stand der Technik, wo in allen Pegelbereichen eine Mittelung von mehreren Messwerten durchgeführt wird, kann die Schaltgeschwindigkeit des optischen Sensors 1 deutlich gesteigert werden, da der Bereich B1 nur selten und als kurzzeitiger Übergangsbereich auftritt.

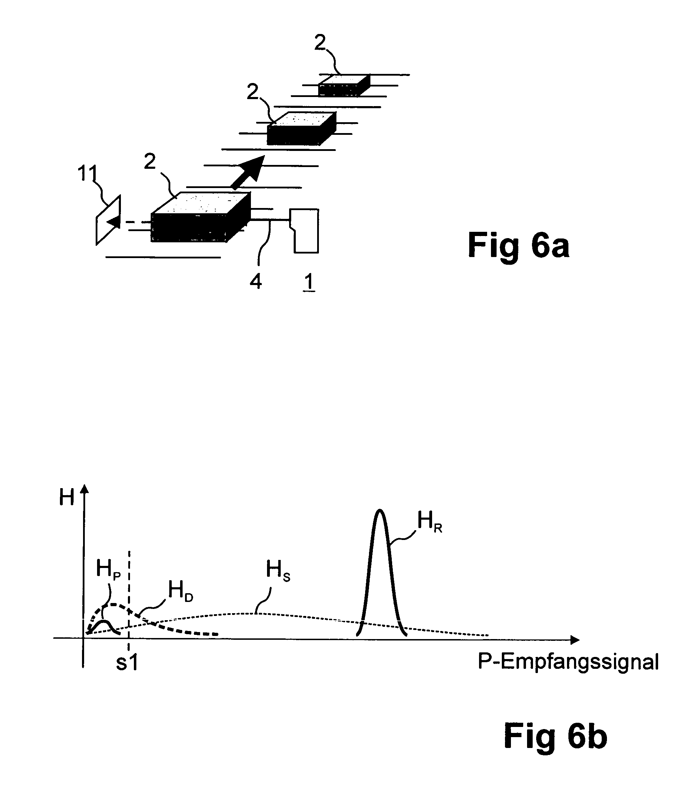

Figur 6a zeigte eine Anordnung eines optischen Sensors 1, dessen Sendelichtstrahlen 4, 4' bei freiem Überwachungsbereich gegen einen Reflektor 11, insbesondere einen Retroreflektor, geführt sind. Der optische Sensor 1, dessen Aufbau ansonsten dem optischen Sensor 1 gemäß Figur 1 entspricht, bildet somit eine Reflexionslichtschranke, mittels derer im Überwachungsbereich vor dem Reflektor 11 liegende Objekte 2 erfassbar sind.

Figur 6b zeigt ein Diagramm mit dem prinzipiellen Verlauf der Häufigkeitsverteilungen der Empfangspegel, die bei der Detektion folgender verschiedener Objekte 2 hervorgerufen werden:

- $H_R$ (Reflektor)

- $H_S$ (spiegelnde Fläche)

- $H_D$ (diffus reflektierende Oberflächen)

- $H_P$ (Objekte bei Detektion des optischen Sensors 1 mit einem Polarisationsfilter)

Reflexionslichtschranken nach dem Stand der Technik benutzen einen Schwellwert s1, um eine "freie Strecke" (Reflektor 11) und ein "Objekt 2" zu unterscheiden. Damit alle Toleranzen des optischen Sensors 1, des Reflektors 11, der Applikationsgeometrie (Reflektordistanz, Reflektorgröße, Ausrichtung) und die Verschmutzung berücksichtigt werden, muss der Schwellwert s1 sehr niedrig angesetzt werden. Das führt dazu, dass trotz des Einsatzes von Polarisationsfiltern kritische Objekte 2, wie z. B. glänzende Objekte 2, die in einer Kunststofffolie verpackt sind (Folienobjekte), zu Fehlschaltungen führen können.

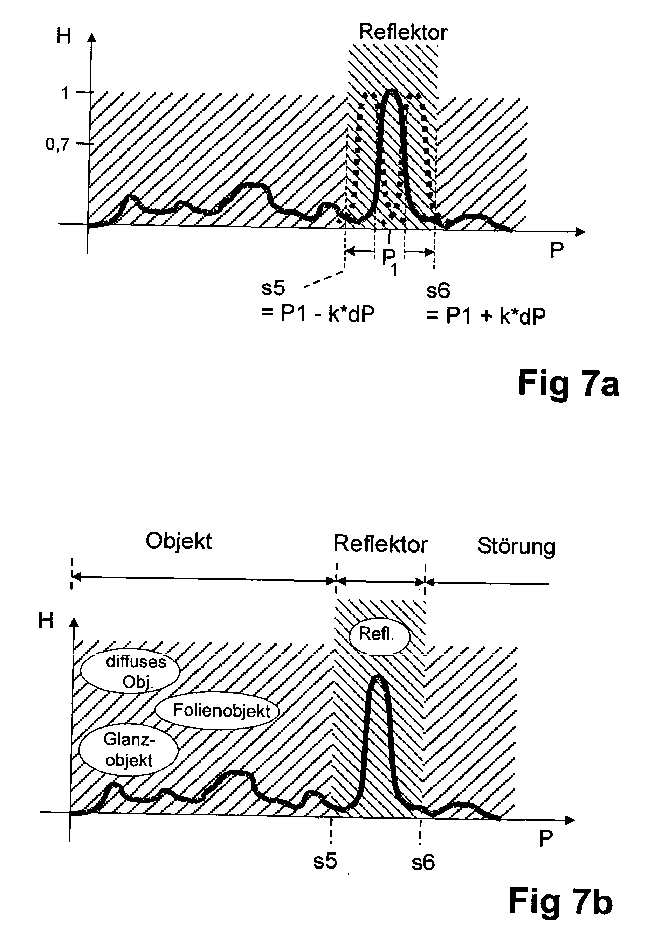

Die Figuren 7a und 7b zeigen die typische Häufigkeitsverteilung der Empfangspegel einer Reflexlichtschranke mit Polarisationsfilter, die im laufenden Betrieb des optischen Sensors 1 gemäß Figur 6a aufgenommen wird. Selbst bei kleinen Lücken zwischen den Häufigkeitsverteilungen der Objekte 2 ergibt sich ein eindeutiges Maximum bei dem Empfangspegel $P_1$, da die Empfangspegel der vom Reflektor 11 reflektierten Empfangslichtstrahlen 6, 6' im Gegensatz zu den von Objekten 2 zurückreflektierten Empfangslichtstrahlen 6, 6' nur wenig streuen. Die Breite dP dieser Häufigkeitsspitze wird z. B. bei H = 0,7 aufgenommen. Liegt dP unter einem vordefinierten Wert, gilt diese Spitze als Verteilung $H_R$ für Empfangspegel vom Reflektor 11 und wird als solche separiert.

Figur 7a zeigt, wie aus der Verteilung $H_R$ des Reflektors 11 zwei Pegelschwellwerte gewonnen werden. Um Pegelschwankungen durch mechanische Vibrationen auf der Reflektorseite zu tolerieren, wird zur Verteilung $H_R$ um den Betrag von dP nach unten und oben erweitert, wodurch die Schwellwerte s5 und s6 gebildet werden, welche die Grenzen der Verteilung $H_R$ des Reflektors 11 definieren.

Figur 7b zeigt die durch die Schwellwerte s5 und s6 definierten Pegelbereiche. Unterhalb von s5 liegen alle unterschiedlichen Objekte 2, wie diffus reflektierende Objekte 2, glänzende Objekten 2 und kritische, d. h. schwer detektierbare, Folienverpackungen. Pegel oberhalb von s6 werden als Störungen interpretiert und führen nicht zu einem Wechsel des Schaltzustandes. Durch Nachführung der Verteilung $H_R$, während des Betriebs des optischen Sensors 1 liegt der Schwellwert s5 immer so, dass ausreichende Funktionsreserven, d. h. ein Abstand der Verteilung des Reflektors 11 zu den Häufigkeitsverteilungen von Objekten 2 verbleibt.

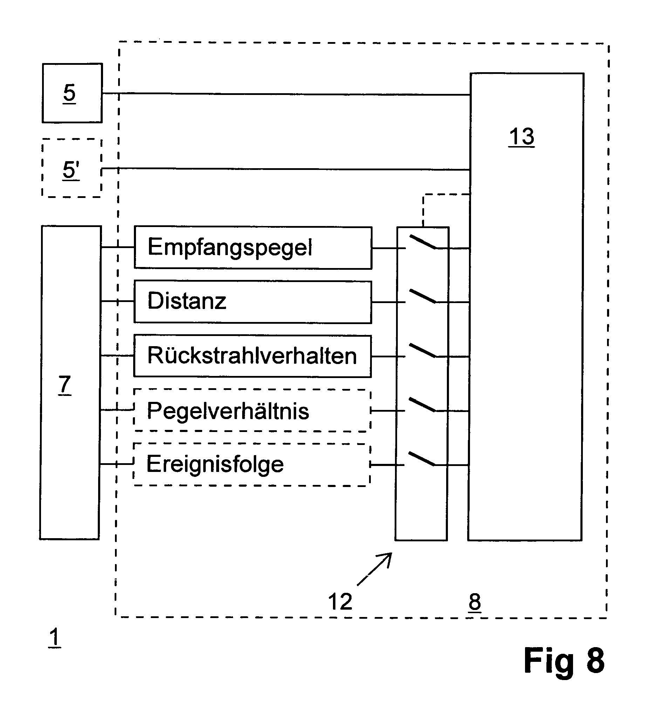

Figur 8 zeigt schematisch den Aufbau eines optischen Sensors 11 mit einer gegenüber dem optischen Sensor 1 nach Figur 1 erweiterten Funktionalität. Der optische Sensor 1 gemäß Figur 8 weist einen ersten Sender 5 und gegebenenfalls einen zweien Sender 5' auf.

Die Auswerteeinheit 8 des optischen Sensors 1 gemäß Figur 8 weist eine Schaltlogik 12 auf, mit welcher verschiedene Auswerteparameter in einer Rechnereinheit 13 als weiteren Bestandteil der Auswerteeinheit 8 aktivierbar sind, um diese dann zur Generierung des Schaltsignals heranzuziehen. Generell kann die Schaltlogik 12 auch derart ausgebildet sein, dass mit dieser eine Gewichtung der Auswerteparameter bei der Generierung des Schaltsignals vorgenommen werden.

Wie aus Figur 8 ersichtlich, kann als erster Auswerteparameter der Empfangspegel der Empfangssignale des Empfängers 7 herangezogen werden. Bei als Distanzsensoren ausgebildeten optischen Sensoren 1 kann die ermittelte Distanz eines Objekts 2 als weiterer Auswerteparameter herangezogen werden. Ein dritter Auswerteparameter bildet das so genannte Rückstrahlverhalten. Dieser Auswerteparameter kommt insbesondere bei optischen Sensoren 1 mit einem Empfänger 7 in Form einer Empfängerzeile zum Tragen. Je nach Objektbeschaffenheit wird bei Abbildung der vom jeweiligen Objekt 2 zurückreflektierten Empfangslichtstrahlen 6, 6' auf dem Empfänger 7 ein symmetrischer oder asymmetrischer Verlauf der Empfangssignale der einzelnen Empfangssignale erhalten. So liefert beispielsweise ein Retroreflektor eine asymmetrische Verteilung des Verlaufs der Empfangssignale, d. h. ein asymmetrisches Rückstrahlverhalten, während ein diffus reflektierendes Objekt 2 ein symmetrisches Rückstrahlverhalten liefert. Ein weiterer Auswerteparameter für einen optischen Sensor 1 mit zwei Sendern 5, 5' ist das Pegelverhältnis, d. h. das Verhältnis der Empfangspegel, die bei allein aktiviertem erstem Sender 5 bzw. bei allein aktiviertem zweiten Sender 5' erhalten werden. Ein weiterer möglicher Auswerteparameter ist die Ereignisfolge, d. h. es wird die zeitliche Abfolge aufeinander folgender Objektdetektionen analysiert.

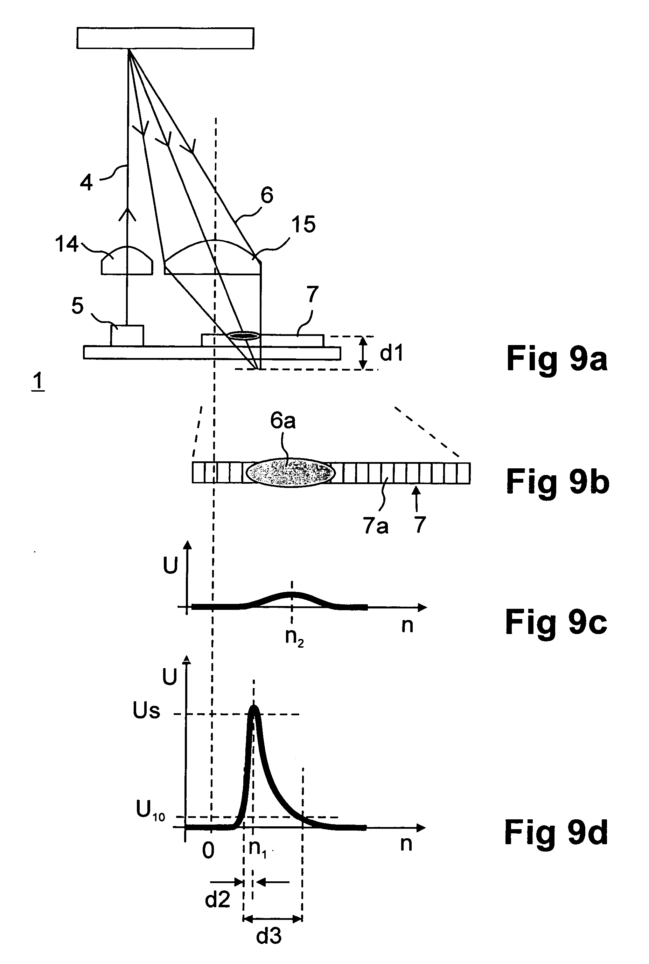

Figur 9a zeigt beispielhaft eine Ausgestaltung eines optischen Sensors 1 gemäß Figur 8. Der optische Sensor 1 weist einen Sendelichtstrahlen 4 emittierenden Sender 5 mit vorgeordneter Sendeoptik 14 und einen als Empfängerzeile ausgebildeten Empfänger 7 mit vorgeordneter Empfangsoptik 15 auf. Der optische Sensor 1 ist als Reflexionslichtschranke ausgebildet, d. h. der Überwachungsbereich ist von einem Reflektor 11, insbesondere einem Retroreflektor, gebildet. Der Aufbau der Empfängerzeile mit einer zeilenförmigen Anordnung von Empfangselementen 7a, auf welche der Empfangslichtfleck 6a abgebildet wird, ist in Figur 9b dargestellt.

Die Empfangslichtstrahlen 6 werden durch die Empfangsoptik 15 so auf den Empfänger 7 gerichtet, dass der Fokus in einem Abstand d1 hinter der Ebene des Empfängers 7 liegt. Als Beurteilungskriterium zur Unterscheidung eines Reflektors 11 von einem diffus reflektierenden Objekt 2, wird, wie in den Figuren 9c und 9d gezeigt, das Rückstrahlverhalten durch das Verhältnis der Abstände d2 / d3 definiert. Dabei bedeutet d3 die Breite des Signalverlaufs bei $U_{10}$, z. B. bei einem Zehntel der Maximalamplitude Us. Das Empfangselement 7a n1 bei der Maximalamplitude Us teilt den Signalverlauf, wobei der kleinere Abstand als d2 bezeichnet wird. Im Gegensatz zu einem diffus reflektierenden Objekt 2 liegt bei einem Reflektor 11 d2/d3 deutlich unter 0,5.

Figur 9c zeigt den Signalverlauf eines diffus reflektierenden Objekts 2, bei dem die Maximalamplitude bei n2 etwa in der Mitte des Signalverlaufs liegt und damit das Verhältnis d2/d3 etwa 0,5 ist.

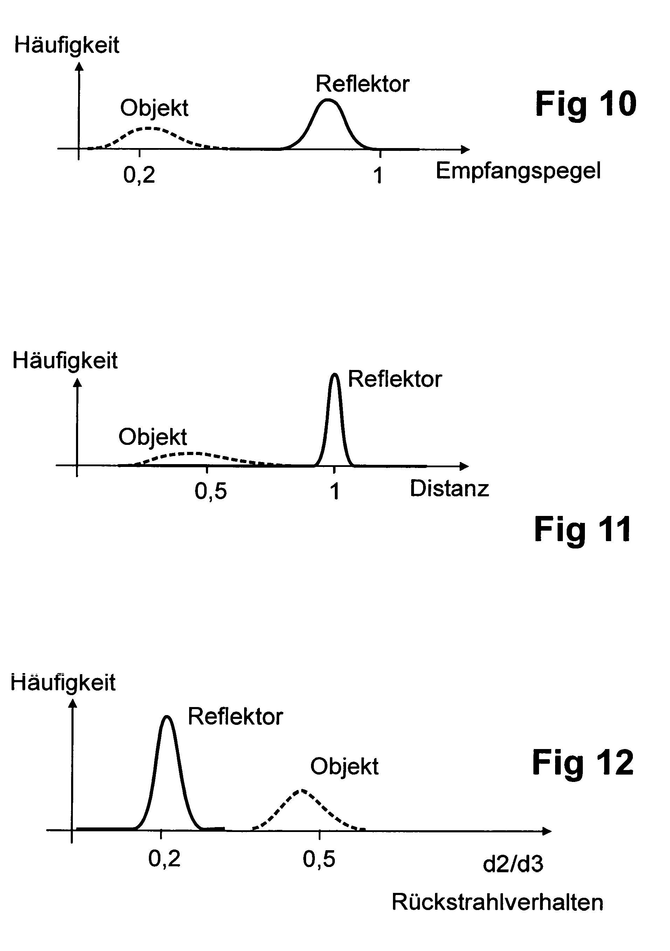

Weitere Auswerteparameter für den optischen Sensor 1 gemäß Figur 9a, die zur Unterscheidung einer Detektion des Reflektors 11 (entsprechend einem freien Überwachungsbereich) und eines Objekts 2 im Überwachungsbereich beitragen, sind in den Figuren 10 bis 12 dargestellt.

Figur 10 zeigt die typische Häufigkeitsverteilung für den Empfangspegel des Empfangssignals des optischen Sensors 1 bei Detektion eines Reflektors 11 und eines Objekts 2. Der Reflektor 11 liefert in der Regel deutlich höhere Intensitätswerte und kann dadurch bereits gut von einem diffus reflektierenden Objekt 2 unterschieden werden.

Figur 11 zeigt die typische Häufigkeitsverteilung für die mit einem optischen Sensor 1 ermittelten Distanzwerte bei Detektion eines Reflektors 11 und eines Objekts 2. Wenn die Distanz zum Reflektor 11, der den Detektionsbereich begrenzt, mit 1 definiert wird, dann müssen Objekte 2 eine um mindestens ihre Tiefe kürzere Distanz liefern.

Figur 12 zeigt die typische Häufigkeitsverteilung für das Rückstrahlverhalten eines Reflektors 11 und eines diffus reflektierenden Objekts 2.

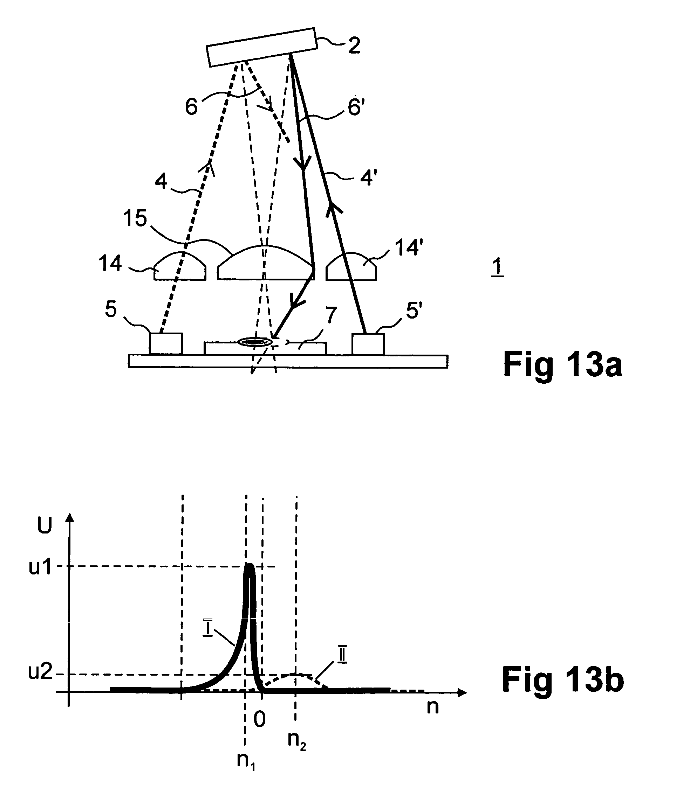

Figur 13a zeigt eine Variante eines optischen Sensors 1, welche gegenüber dem optischen Sensor 1gemäß Figur 9a dahingehend erweitert ist, dass dieser zwei Sendelichtstrahlen 4, 4' emittierenden Sender 5, 5' mit jeweils einer vorgeordneten Sendeoptik 14, 14' aufweist.

Die Strahlachsen der Sendelichtstrahlen 4, 4' verlaufen geneigt zueinander, so dass sich diese im Überwachungsbereich schneiden. Bei der Anordnung gemäß Figur 13a wird mit dem optischen Sensor 1 ein Objekt 2 mit einer spiegelnden Oberfläche detektiert.

In Figur 13b ist als gegenüber dem optischen Sensor 1 gemäß Figur 9a zusätzlich erhältliches Auswerteparameter das Pegelverhältnis bei unterschiedlichen aktiven Sendern 5, 5' dargestellt. Der mit I bezeichnete Verlauf des Empfangspegels U über den Empfangselementen 7a der Empfängerzeile wird bei aktiviertem Sender 5' erhalten. Dieser Signalverlauf entspricht jenen, der auch bei freiem Strahlengang bei Führung der Sendelichtstrahlen 4' gegen den Reflektor erhalten worden wäre. Demgegenüber wird bei aktivem Sender 5 ein Signalverlauf II erhalten, der einer Detektion eines diffus reflektierenden Objekts 2 entspricht. Durch die Bildung des Pegelverhältnisses U2/U1, d. h. durch Vergleich der mit den beiden Sendern 5, 5' erhaltenen Signalmustern, kann somit ein Retroreflektor deutlich von einem spiegelnden Objekt 2 unterschieden werden.

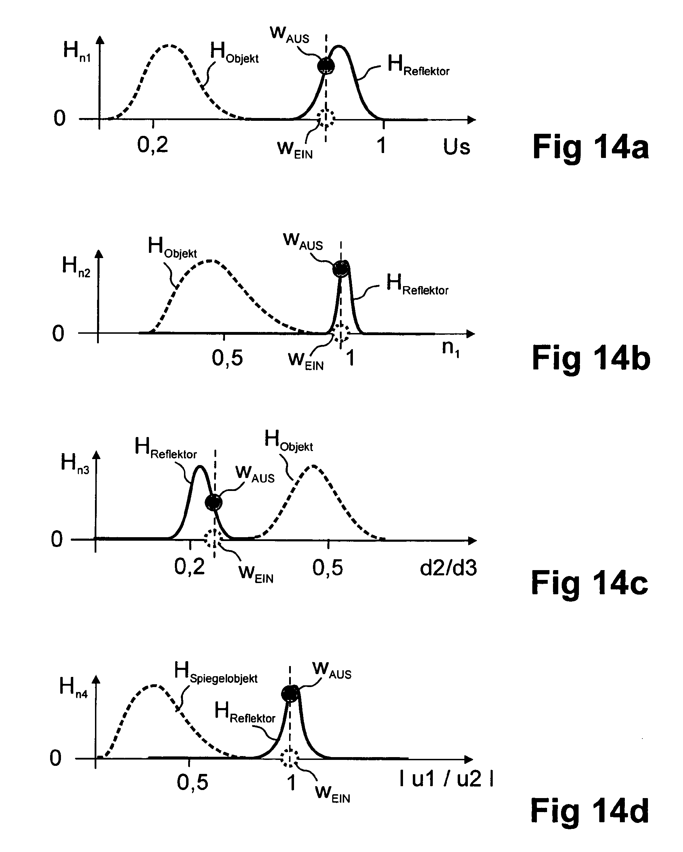

Die Figuren 14a bis 14d zeigen die Häufigkeitsverteilungen für die unterschiedlichen Auswerteparameter Empfangspegel (Figur 14a), Distanz (Figur 14b), Rückstrahlverhalten (Figur 14c) und Pegelverhältnis (Figur 14d) für einen als Reflexionslichtschranke ausgebildeten optischen Sensor 1 gemäß Figur 13a.

Figur 14a zeigt die Häufigkeitsverteilungen in Abhängigkeit der Empfangspegel.

Figur 14b zeigt die Häufigkeitsverteilungen in Abhängigkeit der Empfangselemente 7a des Empfängers 7 als Maß für die Objektdistanz.

Figur 14c zeigt die Häufigkeitsverteilungen in Abhängigkeit vom Verhältnis d2/d3 gemäß Figur 9d.

Figur 14d zeigt die Häufigkeitsverteilungen in Abhängigkeit vom Verhältnis (U1/U2) gemäß Figur 13b.

Weiterhin ist in den Figuren 14a bis 14d mit gestrichelter Linie jeweils ein aktueller Messwert bei der Detektion des Reflektors 11 bei freiem Überwachungsbereich dargestellt.

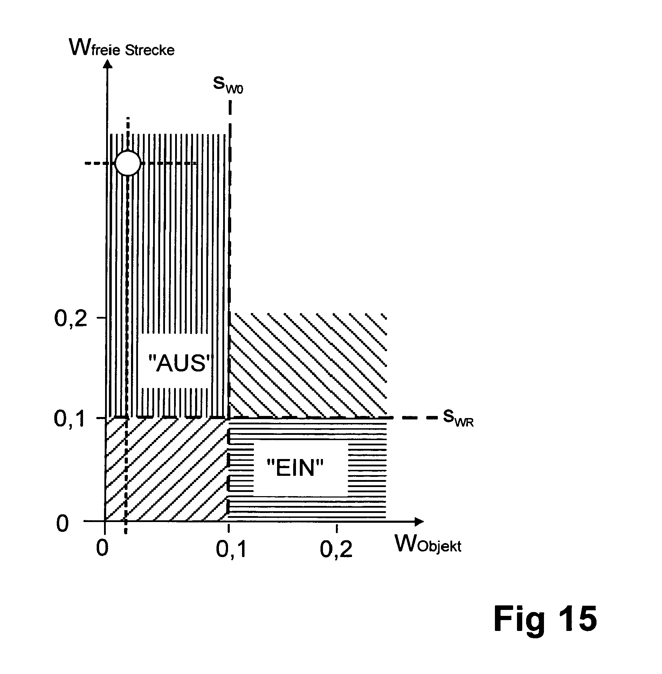

Figur 15 zeigt die Auswertematrix mit den Wahrscheinlichkeiten $W_{freie\_Strecke}$ und $W_{Objekt}$. Mit Hilfe der Wahrscheinlichkeitsschwellwerte $S_{WR}$ und $S_{WO}$ werden vier Bereiche gebildet.

Durch Multiplikation aller Wahrscheinlichkeiten $W_{aus}$, die entsprechend den Figuren 14a bis 14d mit Hilfe der Wahrscheinlichkeitsverteilung $H_{Reflektor}$ ermittelt wurden, ergibt sich die Wahrscheinlichkeit $W_{freie\_Strecke}$ für das Vorhandensein des Reflektors 11, d. h. eines freien Überwachungsbereichs:

$$W_{freie\_Strecke} = W_{aus}\_1 * W_{aus}\_2 * W_{aus}\_3 * W_{aus}\_4$$

$$= 0{,}8 * 0{,}9 * 0{,}5 * 0{,}9$$

$$= 0{,}32$$

Die entsprechende Berechnung mit den Wahrscheinlichkeiten $W_{ein}$ führt zur Wahrscheinlichkeit $W_{Objekt}$ für das Vorhandensein eines Objekts:

$$W_{Objekt} = W_{ein\_1} * W_{ein\_2} * W_{ein\_3} * W_{ein\_4}$$
$$= 0{,}1 * 0{,}1 * 0{,}1 * 0{,}1$$
$$= 0{,}0001$$

Objekt erkannt heißt "ein".

Das Ergebnis liegt eindeutig im Bereich "AUS" der Auswertematrix, woraus der Schaltzustand "freier Überwachungsbereich" für den optischen Sensor 1 gebildet wird.

Durch Gewichtung oder Ausschalten von einzelnen Auswerteparametern entsprechend dem aktuellen Betriebsmodus, kann das Ergebnis noch weiter verbessert werden.

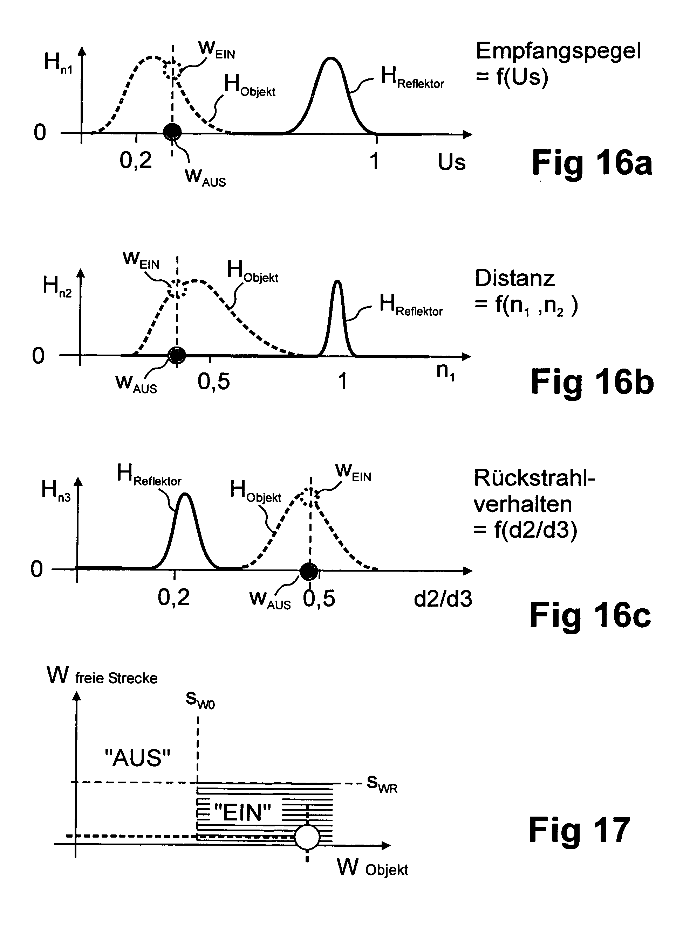

Die Figuren 16 bis 16c zeigen ein Auswertebeispiel der Auswertung von Empfangssignalen eines optischen Sensors 1 bei Detektion eines Objekts 2. Die Häufigkeitsverteilungen gemäß den Figuren 16a bis 16c entsprechen den Häufigkeitsverteilungen gemäß den Figuren 14a bis 14c. Die gestrichelten Linien in den Figuren 16a bis 16c kennzeichnen die aktuellen Messwerte bei der Detektion des Objekts 2. Bei der Objektdetektion ist das Pegelverhältnis nicht als Auswerteparameter herangezogen, wobei dies in der Schaltlogik 12 in Abhängigkeit des Auswerteparameters "Empfangssignal" festgelegt ist. Wenn nämlich die Wahrscheinlichkeit für $W_{ein\_1}$ einen Mindestwert unterschreitet, wird die Wahrscheinlichkeit $W_{ein\_4}$ nicht berücksichtigt. Damit ergibt sich für die Wahrscheinlichkeit:

$$W_{freie\_Strecke} = W_{aus\_1} * W_{aus\_2} * W_{aus\_3}$$
$$= 0{,}1 * 0{,}1 * 0{,}1$$
$$= 0{,}001$$

$$W_{Objekt} = W_{ein\_1} * W_{ein\_2} * W_{ein\_3}$$
$$= 0{,}8 * 0{,}8 * 0{,}9$$
$$= 0{,}6$$

Hier ist das Vorhandensein des Reflektors 11 sehr unwahrscheinlich und das Vorhandensein des Objekts 2 sehr wahrscheinlich, was, wie in Figur 17 gezeigt, zum Schaltzustand "EIN", d. h. "Objekt erkannt" führt.

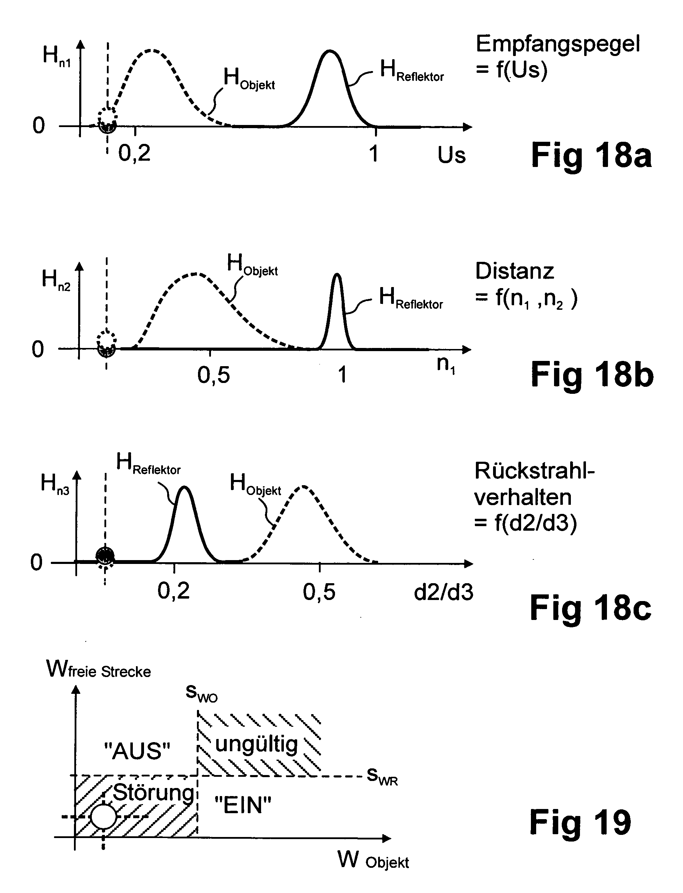

Die Figuren 18a bis 18c zeigen ein Auswertebeispiel bei einer externen Störung. Die Häufigkeitsverteilungen gemäß den Figuren 18a bis 18c entsprechen den Häufigkeitsverteilungen gemäß den Figuren 16a bis 16c. Mit den gestrichelten Linien sind die Messwerte bedingt durch eine Störung dargestellt. Im vorliegenden Fall wird angenommen, dass viele der Auswerteparameter durch die Störung, z. B. Übersteuerung durch starkes Fremdlicht, weit von ihren typischen Werten für "Reflektor" 11 und "Objekt" 2 entfernt sind, was sich in geringen Wahrscheinlichkeitswerten für beide Zustände äußert:

$$W_{freie\_Strecke} = W_{aus}\_1 * W_{aus}\_2 * W_{aus}\_3$$

$$= 0{,}1 * 0{,}1 * 0{,}2$$

$$= 0{,}002$$

$$W_{Objekt} = W_{ein}\_1 * W_{ein}\_2 * W_{ein}\_3$$

$$= 0{,}3 * 0{,}2 * 0{,}1$$

$$= 0{,}006$$

Diese Werte bedeuten nach Figur 19 "Störung" und der optische Sensor 1 behält dabei solange seinen momentanen Schaltzustand bei.

Der Bereich "ungültig" in Figur 19 wird gemeldet, wenn beide Wahrscheinlichkeitswerte über den Schwellwerten $S_{WO}$ und $S_{WR}$ liegen. Dieser Zustand kann eintreten, wenn die Häufigkeitsverteilungen für "freie_Strecke" und für "Objekt" 2 sich zu weit überlappen, d. h. zu wenig unterschiedliche Wahrscheinlichkeiten liefern. Da dieser Zustand bereits während der Inbetriebnahme auftritt, kann die Warnmeldung "ungültig" dazu genutzt werden, die Justage des optischen Sensors 1 zu verbessern oder den Reflektor 11 zu optimieren. Während der Inbetriebnahme können die Schwellwerte $S_{WO}$ und $S_{WR}$ reduziert werden, um eine ausreichende Funktionsreserve für den Betrieb sicher zu stellen.

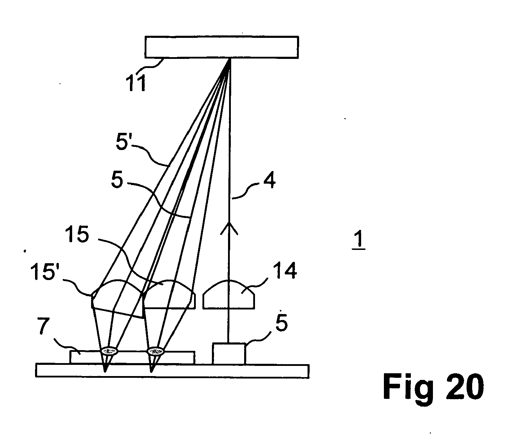

Figur 20 zeigt ein Ausführungsbeispiel eines optischen Sensors 1 mit einem Sendelichtstrahlen 4 emittierenden Sender 5 und einer Empfangszeile als Empfänger 7. Dem Sender 5 ist eine Sendeoptik 14 nachgeordnet. Dem Empfänger 7 sind zwei Empfangsoptiken 15, 15' mit zwei Empfangslinsen nachgeordnet. Eine oder beide der nebeneinander liegenden Empfangslinsen können eine Prismenfläche enthalten, um den Bereich der Empfangszeile besser ausnutzen zu können. Weiterhin kann der optische Sensor 1 auch so modifiziert sein, dass dieser zwei separate Empfänger 7 ausweist.

**Patentansprüche**

1. Verfahren zum Betrieb eines optischen Sensors (1) mit mindestens einem Sendelichtstrahlen (4, 4') emittierenden Sender (5, 5'), mindestens einem Empfangslichtstrahlen (6, 6') empfangenden Empfänger (7) und einer Auswerteeinheit (8) zur Generierung eines binären Schaltsignals, dessen Schaltzustände angeben, ob sich ein Objekt (2) in einem Überwachungsbereich befindet oder nicht, **dadurch gekennzeichnet, dass** aus Empfangssignalen des Empfängers (7) wenigstens ein Auswerteparameter abgeleitet wird, dass für Werte oder Wertbereiche des Auswerteparameters Häufigkeitsverteilungen ermittelt werden, und dass durch Zuordnung von aktuell ermittelten Messwerten für die Auswerteparameter zu den Häufigkeitsverteilungen Wahrscheinlichkeiten für die Schaltzustände des binären Schaltsignals und/oder des Status des optischen Sensors (1) abgeleitet werden.

2. Verfahren nach Anspruch 1, **dadurch gekennzeichnet, dass** die Häufigkeitsverteilungen in einem Einlernvorgang vor Inbetriebnahme des optischen Sensors (1) ermittelt werden.

3. Verfahren nach Anspruch 2, **dadurch gekennzeichnet, dass** die Häufigkeitsverteilungen während des Betriebs des optischen Sensors (1) permanent nachgeführt werden.

4. Verfahren nach einem der Ansprüche 1 bis 3, **dadurch gekennzeichnet, dass** bei Verwendung mehrerer Auswerteparameter die Produkte von Einzelwahrscheinlichkeiten für die jeweiligen Auswerteparameter zur Bildung von Gesamtwahrscheinlichkeiten für die Schaltzustände des binären Schaltsignals und/oder des Status des optischen Sensors (1) abgeleitet werden.

**5.** Verfahren nach einem der Ansprüche 1 bis 4, **dadurch gekennzeichnet, dass** zur Statusermittlung des optischen Sensors (1) Wahrscheinlichkeiten ermittelt werden, ob eine Störung des optischen Sensors (1) oder ob ungültige Messwerte vorliegen.

**6.** Verfahren nach einem der Ansprüche 4 oder 5, **dadurch gekennzeichnet, dass** aus einer Menge von Auswerteparametern eine Teilmenge von Auswerteparametern ausgewählt wird, deren Häufigkeitsverteilungen zur Ermittlung der Gesamtwahrscheinlichkeiten für die Schaltzustände des Schaltsignals und/oder des Status des optischen Sensors (1) herangezogen werden.

**7.** Verfahren nach einem der Ansprüche 4 bis 6, **dadurch gekennzeichnet, dass** eine Gewichtung von Auswerteparametern durchgeführt wird.

**8.** Verfahren nach einem der Ansprüche 6 oder 7, **dadurch gekennzeichnet, dass** die Auswahl oder Gewichtung von Auswerteparametern in Abhängigkeit des Betriebsmodus des optischen Sensors (1) durchgeführt wird.

**9.** Verfahren nach einem der Ansprüche 1 bis 8, **dadurch gekennzeichnet, dass** die Amplituden der Empfangssignale des Empfängers (7) als Auswerteparameter verwendet werden.

**10.** Verfahren nach einem der Ansprüche 1 bis 9, **dadurch gekennzeichnet, dass** mit dem Empfänger (7) Distanzwerte ermittelt werden, welche als Auswerteparameter verwendet werden.

**11.** Verfahren nach einem der Ansprüche 1 bis 10, **dadurch gekennzeichnet, dass** der optische Sensor (1) zwei Sender (5, 5') aufweist, wobei die Amplitudenverhältnisse der mit den einzelnen Sendern (5, 5') erhaltenen Empfangssignale als Auswerteparameter verwendet werden.

**12.** Verfahren nach einem der Ansprüche 1 bis 10, **dadurch gekennzeichnet, dass** der optische Sensor (1) zwei Empfänger (7) aufweist, wobei die Amplitudenverhältnisse der Empfangssignale der Empfänger (7) als Auswerteparameter verwendet werden.

**13.** Verfahren nach einem der Ansprüche 1 bis 12, **dadurch gekennzeichnet, dass** die zeitliche Folge von Empfangssignalen des Empfängers (7) als Auswerteparameter verwendet werden.

**14.** Optischer Sensor (1) zur Erfassung von Objekten (2) in einem Überwachungsbereich, mit mindestens einem Sendelichtstrahlen (4, 4') emittierenden Sender (5, 5'), mindestens einem Empfangslichtstrahlen (6, 6') empfangenden Empfänger (7) und einer Auswerteeinheit (8) zur Generierung eines binären Schaltsignals, dessen Schaltzustände angeben, ob sich ein Objekt (2) im Überwachungsbereich befindet oder nicht, **dadurch gekennzeichnet, dass** in der Auswerteeinheit (8) aus den Empfangssignalen des Empfängers (7) wenigstens ein Auswerteparameter abgeleitet wird, dass für Werte oder Wertebereiche des Auswerteparameters in der Auswerteeinheit (8) Häufigkeitsverteilungen ermittelt werden, und dass durch Zuordnung von aktuell ermittelten Messwerten für die Auswerteparameter zu den Häufigkeitsverteilungen Wahrscheinlichkeiten für die Schaltzustände des binären Schaltsignals und/oder des Status des optischen Sensors (1) abgeleitet werden.

**15.** Optischer Sensor nach Anspruch 14, **dadurch gekennzeichnet, dass** dieser zwei Sender (5, 5') aufweist.

**16.** Optischer Sensor nach Anspruch 15, **dadurch gekennzeichnet, dass** dieser einen Empfänger (7) mit einer zeilenförmigen Anordnung von Empfangselementen (7a) aufweist.

**17.** Optischer Sensor nach Anspruch 15, **dadurch gekennzeichnet, dass** der Fokus der Empfangslichtstrahlen (6, 6') hinter der Ebene des Empfängers (7) liegt.

**18.** Optischer Sensor nach Anspruch 17, **dadurch gekennzeichnet, dass** dem Empfänger (7) eine Empfangsoptik (15, 15') bestehend aus wenigstens zwei Linsen vorgeordnet ist.

**19.** Optischer Sensor nach einem der Ansprüche 15 bis 18, **dadurch gekennzeichnet, dass** die Strahlachsen der Sendelichtstrahlen (4, 4') der beiden Sender (5, 5') zueinander geneigt sind, so dass diese sich innerhalb des Überwachungsbereichs schneiden.

**Fig 1**

**Fig 2**

**Fig 3**

**Fig 4a**

**Fig 4b**

**Fig 4c**

**Fig 4d**

**Fig 5**

**Fig 6a**

**Fig 6b**

**Fig 7a**

**Fig 7b**

**5**

**5'**

**7**

Empfangspegel

Distanz

Rückstrahlverhalten

Pegelverhältnis

Ereignisfolge

**13**

12    **8**

**1**

**Fig 8**

**Fig 9a**

**Fig 9b**

**Fig 9c**

**Fig 9d**

Häufigkeit

Reflektor

**Fig 10**

Objekt

0,2                    1        Empfangspegel

Häufigkeit

Reflektor

Objekt

0,5              1        Distanz

**Fig 11**

Häufigkeit

Reflektor

Objekt

**Fig 12**

0,2                0,5           d2/d3

Rückstrahlverhalten

**Fig 13a**

**Fig 13b**

Fig 14a

Fig 14b

Fig 14c

Fig 14d

**Fig 15**

Empfangspegel
= f(Us)

**Fig 16a**

Distanz
= f($n_1$ ,$n_2$ )

**Fig 16b**

Rückstrahlverhalten
= f(d2/d3)

**Fig 16c**

**Fig 17**

$H_{n1}$

$H_{Objekt}$    $H_{Reflektor}$

0

0,2    1    Us

Empfangspegel
= f(Us)

**Fig 18a**

$H_{n2}$

$H_{Objekt}$

$H_{Reflektor}$

0

0,5    1    $n_1$

Distanz
= f($n_1$ , $n_2$ )

**Fig 18b**

$H_{n3}$

$H_{Reflektor}$    $H_{Objekt}$

0

0,2    0,5    d2/d3

Rückstrahlverhalten
= f(d2/d3)

**Fig 18c**

$W_{freie\ Strecke}$

$S_{WO}$

"AUS"    ungültig

$S_{WR}$

Störung    "EIN"

W Objekt

**Fig 19**

23

Fig 20